# EUROPEAN PATENT APPLICATION

(11) **EP 2 779 771 A1**
(43) Date of publication of application: **17.09.2014**
(21) Application number: 13290054.9
(22) Date of filing: 13.03.2013
(51) Int. Cl.: H04W 72/04, H04W 84/20

(54) **A method for resource coordination in a cellular system**

(71) Applicant: ALCATEL LUCENT, 92100 Boulogne-Billancourt (FR)
(72) Inventor: Karla, Ingo, 46514 Schermbeck (DE)
(74) Representative: Richardt Patentanwälte PartG mbB

(57) **Abstract**

The present disclosure relates to a method in a cellular system (100, 200), wherein the cellular system (100, 200) comprises a plurality of devices (101, 201) at a same power class, the method comprising in each device of the devices selecting said device of the plurality of devices (101, 201) as a master device (101A, 201A);
forming by the master device (101A, 201A) a cluster (107) of a group of devices of the plurality devices; receiving from a network element (105) of the cellular system information indicative of at least part of the group of devices; coordinating radio resource allocation of the master device with the group of devices using at least the received information.

## Description

### Technical Field

The disclosure relates to telecommunication systems, and more particularly to a method for resource coordination in a cellular system.

### Background

The ongoing trend in telecommunication is that the diversity will ever increase with especially a multitude of different cell sizes with a huge amount of "tiny nodes", such as tiny radio access points and/or mobile stations. Many of these nodes are deployed without any planning or control by the network operator. The network operator may only have limited knowledge about these tiny nodes. The current approaches and cellular Self-Organizing-Network (SON) methods may no longer suited to manage and control the emerging situation with a huge amount of interacting devices.

### Summary

Various embodiments provide for an improved method in a cellular system, an improved computer program product and an improved device as described by the subject matter of the independent claims. Advantageous embodiments are described in the dependent claims.

The term "network element" as used herein refers to a device operable to exchange information in a network environment and configured to communicate traffic, such as packet traffic and/or signaling messages, using the communication network.

The term "device" herein refers to logical devices or other units that may perform data processing and may be able to wirelessly exchange data.

Some embodiments provide a method in a cellular system, wherein the cellular system comprises a plurality of devices at a same power class. A power class refers to a permissible power range at which a device may be configured to transmit. The device may use a power class as defined for example for a User Equipment (UE) i.e. UE power class or for an access point e.g. Base station power class. For example, devices at a same power class e.g. UE power class may be mobile stations.

The method comprises in each device of the devices selecting said device of the plurality of devices as a master device; forming by the master device a cluster of a group of devices of the plurality devices. The term "cluster" refers to the group of devices which are interconnected to accomplish a unified cluster objective function.

The method further comprises, receiving from a network element of the cellular system information indicative of at least part of the group of devices. The network element may be for example a core network element of the cellular system. The core network element may be for example a mobile switch center (MSC), a base station controller (BSC) or an operation and maintenance centre (OMC). The network element may also be a base station of the cellular system that serves the master device.

The method further comprises coordinating radio resource allocation of the master device with the group of devices using at least the received information. The master device may also use its own measurements and/or information from at least part of the group of devices for the coordination.

These features may be advantageous as they may provide an optimal method for a local control of the operation of the plurality of devices using a self-organizing devices of the cluster. Also, these features may dynamically maintain a stable operation of the cellular system even for an unexpected large increase in the number and the heterogeneity of devices.

Another advantage may be that the cellular system may support a higher number of devices than in the conventional systems.

The present method may be automatically performed on a periodic basis, and/or event triggered by the cellular system for example, when the load in the cellular system reaches a maximum load value.

According to one embodiment, the plurality of devices are communicating with the master device via direct radio links without action by the cellular system. The direct communication may be performed between closely located devices instead of conveying data from one device to the other via the radio and core network.

This may be advantageous as it may support the direct communication and increase the efficiency and performance of the cellular system. This may prevent potential system congestion that would otherwise happen when the direct communication is performed with control or action of the cellular system. And, it may increase the capacity of the cellular system by allowing this additional direct communication, and may also provide additional services.

According to one embodiment, the devices are user equipments.
For example, the devices may belong to a same radio cell that is served by a base station of the cellular system, which may facilitate the cluster formation. In another example, the devices that belong to the cluster may also be part of more than one radio cells.

According to one embodiment, the master device is in communication with a first device of the plurality of devices using a communication channel, wherein the formation of the cluster by the master device comprises: determining a channel metric of the communication channel and including the first device in the cluster if the channel metric is different from a predefined threshold value.
This may provide an accurate method for building a suitable cluster, around the master device.

In another example, the master device may store communication history data. The communication history data is indicative of the devices with which the master device communicates. The master device may include in the cluster those devices indicated in the communication history data.

According to one embodiment, the channel metric comprises a received signal strength and/or a signal quality indicator at the master device.
The signal quality indicator may be for example a Reference Signal Received Quality (RSRQ).

According to one embodiment, the channel metric further comprises a path loss. The Path loss may the difference between the transmitted signal power of the master device and the received signal power. This may increase the accuracy of the cluster formation method.

According to one embodiment, the devices are independent access points.
An independent access point may be an access point that is deployed and/or configured independent of the cellular system. The independent access point may be a base station and/or a user deployed femtocell. The independent access points are mutually influencing each other, by for example, interfering with each other. For example, data transmissions on a first communication channel in an access point is interfering with data transmissions on a second communication channel in a second access point.

According to one embodiment, the independent access point comprises a lightradio cube of Alcatel-Lucent.

According to one embodiment, the coordination comprises: receiving load information of at least one device of the group of devices, wherein the at least one device is using a first frequency band for communication; adjusting transmission of data of the master device to the at least one device using the load information, wherein the adjusting comprises transmitting the data in a second frequency band, wherein the second frequency band is at least partially different from the first frequency band.

For example, the adjustment using the load information comprises determining if the at least one device has a load higher than a loading threshold using the load information; and adjusting transmission of data of the master device to the at least one device based on the determination.

The adjustment may be performed such that the throughput of the communication channel that links the master device and the at least one device is higher than a predetermined throughput threshold value. In another example, the adjustment may be performed by determining one or more resources (e.g. different second frequency bands) for data transmission by the master device, wherein each of the one or more resources is associated with a throughput value of the communication channel that links the master device and the at least one device and allocating for data transmission the resources associated with the highest throughput value.

In a further example, the adjustment may be performed by determining one or more resources (e.g. different transmission powers) for data transmission by the master device, wherein each of the one or more resources is associated with an energy consumption value at the master and allocating for data transmission the resources associated with the lowest energy consumption value.

This may be advantageous since each device may consider a cluster objective function for its own resource optimization. The cluster objective function may define, for example, the throughput threshold value that should not be exceeded by the devices. The cluster objective function may also indicate the usage of the highest throughput value and/or the minimization of the energy consumption. The cluster objective function may be determined by the cellular system, and may be comprised in the information received by the master device.

According to one embodiment, the forming of the cluster by the master device comprises grouping in the cluster devices of the plurality of the devices that communicate with the master device using one or more communication channels, with the interference level caused by said communication being higher than a predefined interference threshold value, and with the interference comprising co-channel and adjacent channel interference. This may be advantageous as it may include in the cluster closely spaced devices.

In another example, the forming of the cluster by the master device comprises grouping in the cluster devices of the plurality of the devices that communicate with the master device using one or more communication channels, with the highest interference level caused by said communication.

According to one embodiment, the coordination of the radio resource allocation comprises coordination of a transmit power and/or a frequency resources. This may be advantageous as it may increase the channel capacity to the greatest extent. According to one embodiment, the received information further comprises a condition specification defining performance objectives in the cellular system, wherein the coordination is performed to meet the performance objectives.

According to one embodiment, the condition specification comprises instructions for limiting the interference level at the master device to smaller values than a preset maximum interference value. It may also comprise maximizing the throughput, maximizing the user quality of service or minimizing energy consumption in the cluster and/or the combination thereof.

This may be advantageous as it may support the seamless integration of the present method in the existing cellular system, since the performance objectives of the cellular system are taken into account.

According to one embodiment, the coordination comprises determining one or more communication parameters of the master device, wherein the coordination comprises machine learning the one or more parameters to meet the performance objectives, wherein the one or more communication parameters comprise transmission power of the master device and/or frequency resources for transmission and reception by the master device.

The machine learning comprises iterating through a plurality of different values for the one or more parameters; for each different value, calculating a performance value such as the interference level at the master device, and setting the one or more parameters to the values for which the performance value meets the performance objectives.

According to one embodiment, the coordination comprises determining one or more time slots for a predefined frequency resource, and scheduling communication with at least part of the group of devices according to the one or more time slots and/or one or more frequency sub-bands.

According to one embodiment, the forming of the cluster comprises determining the distance between the master device and each of the plurality of devices; Including in the cluster the devices having distances smaller than a predetermined maximum distance value.

The distance refers to the spatial separation between the master device and each of the plurality of devices. The distance may also refer to a communication distance between the master device and each of the plurality of devices that is characterized by the signal strength at the master device, the signal quality and/or the amount of interference between the master device and each of the plurality of devices e.g. only devices associated with communication distances that are associated with a signal strength higher than a signal strength threshold, a signal quality higher than a signal quality threshold and/or interference amount higher than an interference threshold may be included in the cluster.

Various embodiments relate to a computer program product comprising computer executable instructions to perform the method steps of the method of any one of the preceding embodiments.

Various embodiments relate to a master device of a plurality of devices in a cellular system, wherein the plurality of devices are at a same power class, the master device being adapted to:
- form a cluster of a group of devices of the plurality devices;
- receive from a network element of the cellular system information indicative of at least part of the group of devices;
- coordinate radio resource allocation of the master device with the group of devices using at least the received information.

It is understood that one or more of the aforementioned embodiments may be combined as long as the combined embodiments are not mutually exclusive.

### Brief description of the drawings

In the following embodiments of the invention are explained in greater detail, by way of example only, making reference to the drawings in which:
Fig. 1 illustrates a simplified structure of an exemplary cellular system for resource coordination,
Fig. 2 illustrates a further exemplary cellular system for resource coordination, and
Fig.3 shows a flowchart of a method for resource coordination.

### Detailed description

In the following, like numbered elements in these figures are either similar elements or perform an equivalent function. Elements which have been discussed previously will not necessarily be discussed in later figures if the function is equivalent.

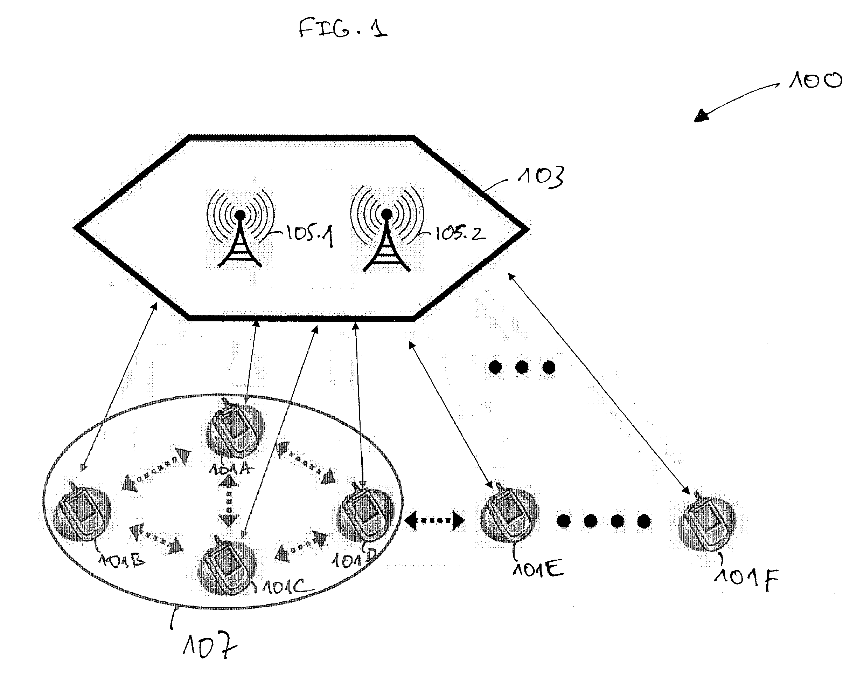

FIG. 1 illustrates a simplified structure of an exemplary cellular system 100. The system 100 comprises a plurality of devices 101 and an access network 103. The access network 103 may comprise a Long Term Evolution (LTE) network. The access network 103 may comprise at least one base station 105. The access network 103 is distributed over land sites called cells, each served by a base station e.g. 105.1 that creates a radio coverage in that cell. The base station 105 may be for example an Evolved Node-Bs (eNBs).

The devices 101 may be, for example, user equipment and may use the same power class definition. For example, the devices 101 may use the Mobile station power classes defined for the mobile stations. The devices 101 are configured to perform a measurement, generate reports, exchange data etc. The measurement may comprise the transmission power of the device, received signal strength by the device and/or device positioning.

The devices 101 are communicatively coupled to the base stations 105 through interface units. The interface unit may be, for example, defined by the Long Term Evolution (LTE) of 3GPP standards. The devices 101 may perform cellular communication. The cellular communication herein refers to a conventional radio access where a device is having a communication link towards and from a base station.

In addition, the devices 101 may perform a direct communication with each other without actions of the cellular system 100. The cellular system 100 does not have knowledge of the direct communications, and thus, may not have the required information for controlling direct communication channels. The direct communication may be performed for example via a WiFi, Bluetooth or NFC.

The devices 101 may allocate one or more resources for the communication. The resources may be shared between the direct communication and the cellular communication. Alternatively, a part of the resources may be reserved solely for the direct communication and the other part of the resources may be reserved for the cellular communication. For example, the devices 101B-D may allocate a first, second and a third frequency band for the direct communication respectively. Each of the frequency bands is associated with a transmission power.

The devices 101 comprise a master device 101A. The master device 101A may directly communicate with the other devices e.g. 101B-F. The master device 101A may allocate a first part of its resources for the direct communication and a second part of the resources for the cellular communication.

Fig.1 further illustrates a cluster 107 grouping devices that are connected. The cluster 107 which is formed by the master device 101A comprises devices 101A-D.

To form the cluster 107, the master device 101A may determine a channel metric of each communication channel linking the master device 1 01A to the other devices 101B-F. The metric channel may be for example a path loss. The master device 101A may select a first set of devices associated with a path loss smaller than a preset maximum path loss. The maximum path loss may be predefined by the cellular system and may be automatically received by the master device 101A from a network element of the cellular device. The network element may be for example a base station 105 or a core network element (not shown) of the cellular system 100

The master device 101 may further determine a second set of devices to be included in the cluster. The second set of devices comprises devices from which the master device receives a signal strength higher than a predefined signal threshold. The master device 1 01A may include in the cluster 107 devices that belong to both the first and second set of the devices. In another example, the master device 101A may select from the first and the second set of devices devices that may belong to a same radio cell and include them in the cluster 107.

The master device 101A may receive information from the network element of the cellular system 100. The information may be indicative of the devices 101. For example, the information may comprise the resources that are allocated by the devices 101 B-D for cellular communication in the cellular system 100. The information may further comprise information policies that indicate performance objectives to be met in the cellular system.

The information may be automatically received (e.g. this may occur on a periodic basis) and/or received in response to a request message that is sent by the master device 101A. An example format of the request message may comprise the master device identity and an indication of the information. The message may be sent as a radio resource control (RRC) message to the base station 105.1 that is serving the master device 101A. In response, the master device 105 may receive the information.

For example, in case the devices 101B-F belong to a same radio cell served by the base station 105.1, said information may be produced by the base station 105.1 as it may have access to the information and may thus collect said information. Alternatively, the information may be collected and received from a core network element of the cellular system 100, either directly or via the base station 105.

The master device 101A may coordinate radio resource allocation with the other devices of the cluster 101B-D using said received information and/or measurements of the cluster devices 101A-D.

For example, the master device 101A may request resource usage information from each of the devices 101B-D. Using the resource usage information, the master device 101A may determine if the devices 101.B-D have a higher resource usage than a resource usage threshold. In case it is determined, for example, that the devices 101B and 101C have a higher resource usage than the resource usage threshold value (e.g. the devices may use more than 80% of their resources), the master device 101 A may adapt the first part of its resources (e.g. frequency band) allocated for the direct communication such that its adapted frequency band may be different from the first and the second frequency bands of the devices 101B and 101C.

In case the adaptation narrows down the frequency band below a minimum frequency band threshold, the master device 1 01A may adapt the second part of its resources allocated to the cellular communication and may use at least part of it for the direct communication. Alternatively, the master device 101A may adapt its frequency band allocated for the direct communication such that it partially overlaps with the first and the third frequency bands. In both cases, the master device 101A may determine one or more adapted frequency bands for the direct communication, calculate the throughput of the communication channel linking the master device 101A to the devices 101B and 101C, and may select the adapted frequency band associated with a maximal averaged throughput (e.g. averaged over the two communication channels linking the devices 101A-101B and 101A-101C).

The method described above may be automatically performed by the master device in a periodic basis. In this example of Fig. 1, each device of the devices may be a master device and thus may perform the method as described above.

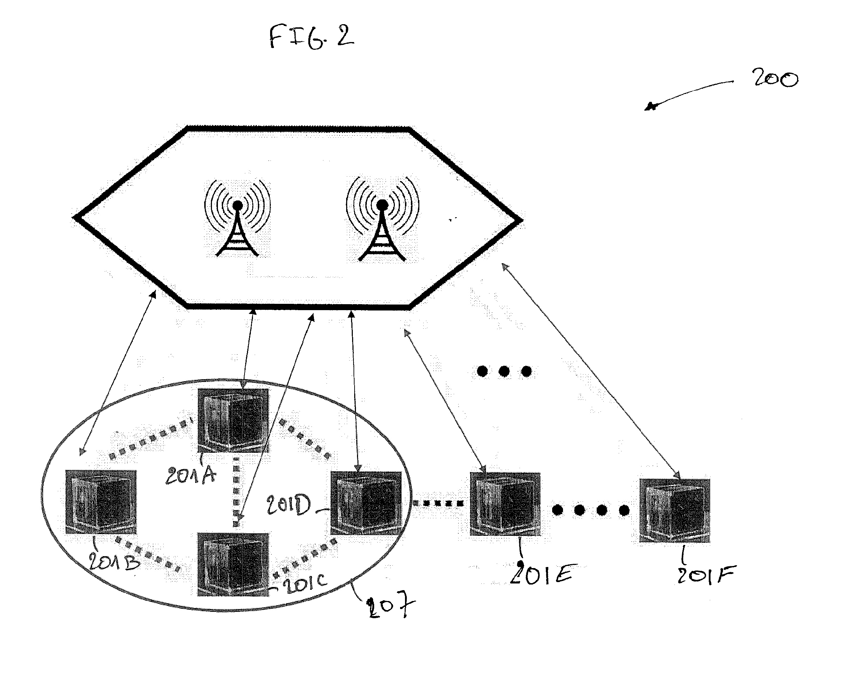

Fig. 2 illustrates a further example of a cellular system 200. The cellular system 200 in Fig. 2 is similar to that shown in Fig. 1. In this example, the devices 201 are independent access points. The access points 201 are mutually influence each other for example via interference, coupled to each other. In this example, the formation of the cluster may be performed as follows. The master device 201A may request from the network element positioning information of the devices 201B-F. This positioning information may be used to determine the distance between the master device 201A and the other devices 201B-F. The master device 201A may compare the determined distances with a stored maximum distance value, and may group into the cluster 207 the devices 201B-D having distances smaller than the maximum distance value.

The master device 201 may request load information from each of the devices 201B-D of the cluster 207. The load information may be for example a number of mobile stations served by each of the devices 201 B-D. Using the load information, the master device 201 may determine if the devices 101B-D have a load higher than a predefined loading threshold. In case it is determined, for example, that the devices 201 B and 201 D have a higher load value than the threshold value, the master device 201.A may adapt its frequency band such that it may be different from the frequency bands used by the devices 201 B and 201 D.

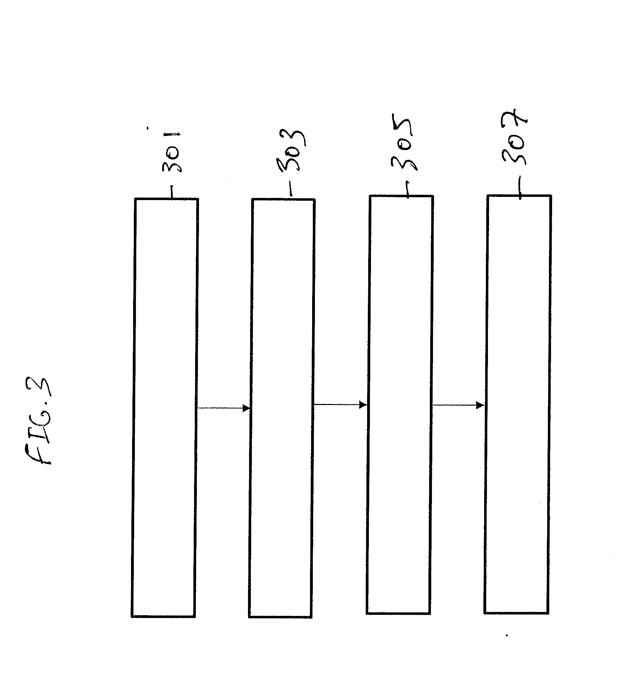

Fig. 3 is a flowchart of a method in a cellular system (e.g. 100 or 200). The cellular system comprises a plurality of devices (e.g. 101 or 201) at a same power class. In step 301, a device of the plurality of devices is selected as a master device. In step 303, a cluster of a group of devices of the plurality devices is formed. In step 305, information indicative of at least part of the group of devices is received from a network element of the cellular system. In step 307, radio resource allocation of the master device with the group of devices using at least the received information is coordinated.

Another example of the application of this present method is illustrated to the emerging situation in 4G and 5G networks, with a mixture of on the one hand fully operator controlled macro-cells and small metro cells, together with on the other hand a huge amount of "tiny nodes". The network operator fully controls its network of "large" cells, such as e.g. 4G or 5G macro-, metro- and small- cells, possibly with the help of some SON techniques for certain use cases. In addition, there is the large amount of "tiny nodes" such as i.e. user deployed light radio antenna cubes and/or mobile devices (user terminals and/or machine devices) which are capable to carry out direct mobile-device to mobile-device communications. These large amount of tiny nodes can no longer be under close control of the network operators, but nevertheless these tiny nodes are still integrated into the "traditional" operators network, where these tiny nodes have a certain autonomy within the guidance and with the support of the operators network.

Here in this example, the expression "tiny nodes" corresponds to the following two kind of nodes and use cases:
A) ProSe, M2M, D2D:
   These tiny nodes are in the first use case such mobile user terminals or machine devices, which are capable to have direct communications connections to other mobile terminals / machine devices. The involved direct communication connections (M2M, D2D, ProSe) are potentially managed via these terminals/devices. For example, two (or more) terminals/devices may be able to establish direct connections between them without involvement of their network operators. Furthermore, there may be many of these tiny nodes and much too many connections, so that the network operator cannot or does not want to configure and optimize on an individual basis each single one of these many devices. The present method does also cover the sub-case (in which not all or only some of these tiny nodes have a direct connection to the network operator) that some tiny nodes are only indirectly connected to the operators network via their direct connection to other -operator connected-nodes.
B) Many interfering tiny access points, e.g. Light Radio Cubes:
   A different application use case is the presence of a huge amount of radio access points, such as for example a huge amount of "Light Radio" small antenna "Cubes". These tiny nodes are deployed in large quantities, many of these are simply deployed without any cell planning by some end-users (or city installation people, or by companies, ...) without (any/much) influence of the overall network operator on where these are placed and about their antenna direction. As a result, there will be strong interactions and couplings between many of these tiny nodes, and the network operator cannot optimize individually the large amount of these tiny nodes by himself as the overall network does not have the needed detailed information about the tiny nodes and about their surroundings. Even if the network operator would have those information, he may not be able to handle with that huge amount of 'arbitrary nodes'. For example, this situation will also occur with Light Radio, when a large amount of their cubes will be placed virtually everywhere.

In these two use cases, these large amount of directly communicating and/or strongly interfering / interacting tiny nodes can be considered as a kind of "underlay network" and this needs to be managed and optimized with a certain amount of autonomy by these tiny nodes themselves, as there is only limited control of the network operator.

These tiny nodes in this underlay network are not independent from the network operator. These are basically completely independent networks and suffer -among other aspects- from a very high signaling overhead which decreases their efficiency.
Here, the aim and challenge is to integrate, merge and supplement this partly autonomous "underlay" network with the functionalities of the network operators' network.

The network operator or the network of the network operator is "loosely" managing and guiding the "underlay network", while "local tasks" are autonomously being performed via these tiny nodes and/or via the network of tiny nodes.

The operators network may support the tiny nodes and their SON algorithms via
- providing the network operators strategies, preferences, policies, which guide the tiny node how it shall try to operate and how best to optimize its own decisions
- providing support information, such as the range of parameters within which the tiny node is allowed to operate (e.g. frequency ranges, which amount of resources, which transmission power settings, ... )
- providing to one tiny node information about other small nodes in the surrounding of that tiny node. This kind of information is important, as it enables one tiny node to consider the situation within its surrounding without having to exchange such information directly with other nodes or to obtain this kind of information by other means. This network support of the algorithm in the underlay network simplifies and improves the distributed algorithm capabilities.
- providing a communications means via its operator controlled cells.
- providing support tasks which facilitate and accelerate the tiny mode operations such as for example it can provide the identification, authorization and security checking, which then allows one tiny node to trust another node so that these nodes could then easily and quickly establish a direct connection.

The underlay network of tiny nodes may be able to manage itself, firstly that it works at all and secondly in a good/optimized way. It may manage the complexity, heterogeneity and allow the tiny nodes to manage and optimize themselves under the special characteristics and constraints of the given tiny nodes, as outlined above.

The tiny nodes and the network of tiny nodes may be able to manage itself autonomously, under the given constrains and under the inter-node interactions. In this example, this may be implemented as follows:
A distributed SON algorithm is located inside each tiny node, a SON algorithm which has the power to initiate actions and parameter changes related to its own tiny node (only). For example, the SON algorithm may decide to change one or more of its own configuration parameters, and/or the tiny node may initiate an action, such as to establish a certain connection for a certain purpose to another tiny node.

This necessity to restrict here the initiated actions and parameter changes to the own node only, arises from the following reasons: Firstly this is due to the potentially limited, not-sufficient or non-existent capabilities to exchange relevant information between tiny nodes. Secondly, because of the large amount of tiny nodes do not have the computation power and/or do not want to spend energy (battery) resources on complex SON optimization calculations. Therefore, simple and fast SON computations are needed here. In this approach, the tiny node does virtually access (predict) the impact of its own actions only, which lead to very few (maybe in the order of 10, less than 100) options which are quickly evaluated.

So, the approach here is to let each tiny node consider a "Cluster Objective Function" for its own optimization. This means that a tiny node is not doing what it best for only himself, but instead, the tiny node is doing what is best for the whole cluster, for itself and for those neighboring nodes within its local area cluster. Thereby, the cluster is a set of tiny nodes within its surrounding, those nodes which directly experience an impact of the actions which this tiny node is capable to do. The establishment of a well suited local area cluster is a part of the algorithm intelligence. The overall network can provide supporting information, and the tiny node may also - optionally- use some internal self-learning intelligence, i.e. it may learn from experience which nodes typically do and do not belong to a useful cluster.

This cluster optimization then ensures, that one node does only take those actions which are considered to be good also for the other nodes in the cluster. This clustering will lead to that an equilibrium is reached quickly. Furthermore, this clustering considers already the inter-node interactions when deciding, which then strongly mitigates possible undesired issues in distributed systems such as ping-pongs or propagating waves of changes/actions.

As outlined above, the overall network supports this node operation, i.e. via providing some information, such as about information about other nodes in the surrounding.

Within each tiny node, one of these distributed algorithm is running of which its algorithm steps are the followings:
- establishing a local area cluster. A previously established one may also be taken again,
- collecting some information about the status within this local cluster. Assumed or previously stored information is taken. If needed, information can also be provided via the support of the operators' network. Measurement and/or sensing information can also contribute to the information basis for decisions.
- assessing possible actions based on this view about surroundings of the tiny node, i.e. it virtually assesses via offline prediction calculation what would be the likely result on the whole local area cluster if this node should initiate this evaluated action or parameter change.
- optimizing one or more parameters of the tiny node. This clustered approach is a flexible optimization concept, which can be applied to several still precisely, to define concrete scenarios, parameters and capabilities. Typical optimization actions are the following:
   ○ Which frequency band/part to use, considering the inter-node interference situation
   ○ Which transmission power is best to be used
   ○ establishing or not a direct communication connection and to which other node(s)

The evaluation and rating metric can also be tailored to optimize especially the energy efficiency, which then results in that this algorithm would also optimize the energy and "green" aspects. If the possible actions are predicted to improve the cluster situation, then that best rated or best suitable action is carried out via this tiny node. Optionally, there are self learning functionalities to support the cluster creation and to improve the accuracy of the internal prediction which access the possible candidate options. The operators network may -depending on the concrete application use case- provide support and information provisioning.

As a result of this distributed algorithm, the tiny nodes manage to optimize themselves relatively quickly, consider and resolve inter-node interactions and to achieve reasonably fast a stable situation in this underlay network of nodes with independent distributed SON decision engines.

### List of reference numerals

- 100: cellular system
- 101: devices
- 103: access network
- 105: base station
- 107: cluster
- 200: cellular system
- 201: access point
- 207: cluster.

## Claims

1. A method in a cellular system (100, 200), wherein the cellular system (100, 200) comprises a plurality of devices (101, 201) at a same power class, the method comprising in each device of the devices (101, 201):
- selecting said device of the plurality of devices as a master device (101A, 201A);
- forming by the master device (101A, 201A) a cluster (107) of a group of devices of the plurality devices (101, 201);
- receiving from a network element (105) of the cellular system information indicative of at least part of the group of devices;
- coordinating radio resource allocation of the master device with the group of devices using the received information.

2. The method of claim 1, wherein the plurality of devices (101, 201) are communicating with the master device (101A, 201A) via direct radio links without action by the cellular system (100, 200).

3. The method of claim 1 or 2, wherein the devices are user equipment.

4. The method of claim 1, 2 or 3, wherein the master device (1 01A) is in communication with a first device of the plurality of devices (101) using a communication channel, wherein the forming of the cluster (107) by the master device (1 01A) comprises: determining a channel metric of the communication channel and including the first device in the cluster (107) if the channel metric is different from a predefined threshold value.

5. The method of claim 4, wherein the channel metric comprises a received signal strength and/or a signal quality indicator at the master device (101A).

6. The method of claim 1 or 2, wherein the devices (101, 201) are independent access points.

7. The method of any of preceding claims, wherein the forming of the cluster comprises
- determining the distance between the master device (101A, 201A) and each of the plurality of devices (101, 201);
- Including in the cluster (107) the devices having distances smaller than a predetermined maximum distance value.

8. The method of any of preceding claims, wherein the forming of the cluster (107) by the master device (101A, 201A) comprises grouping in the cluster (107) devices of the plurality of the devices (101, 201) that communicate with the master device (101A, 201A) using one or more communication channels, with the interference level caused by said communication being higher than a predefined interference threshold value, and with the interference comprising co-channel and adjacent channel interference.

9. The method of claim 1 or 6, wherein the coordination comprises:
- receiving load information of at least one device of the group of devices (201 B-D), wherein the at least one device is using a first frequency band for communication;
- adjusting transmission of data of the master device (201A) to the at least one device using the load information, wherein the adjusting comprises transmitting the data in a second frequency band , wherein the second frequency band is at least partially different from the first frequency band.

10. The method of any of preceding claims, wherein the coordination of the radio resource allocation comprises coordination of a transmit power, and/or frequency resources.

11. The method of any of preceding claims, wherein the received information further comprises a condition specification defining performance objectives in the cellular system (100, 200), wherein the coordination is performed to meet the performance objectives.

12. The method of any of preceding claims, wherein the coordinating comprises determining one or more time slots for a predefined frequency resource, and scheduling communication with at least part of the group of devices according to the one or more time slots and/or one or more frequency sub-bands.

13. The method of claim 10, determining one or more communication parameters of the master device (1 01A, 201A), wherein the coordination comprises machine learning the one or more parameters to meet the performance objectives, wherein the one or more communication parameters comprise transmission power of the master device (101A, 201A) and/or frequency bandwidth for transmission and reception by the master device (101A, 201A).

14. A computer program product comprising computer executable instructions to perform the method steps of the method of any one of the preceding claims.

15. A master device (101A, 201A) of a plurality of devices (101, 201) in a cellular system (100, 200), wherein the plurality of devices are at a same power class, the master device (101A, 201A) being adapted to:
- form a cluster of a group of devices of the plurality devices (101, 201);
- receive from a network element (105) of the cellular system (100, 200) information indicative of at least part of the group of devices;
- coordinate radio resource allocation of the master device with the group of devices using the received information.
